# EUROPÄISCHE PATENTANMELDUNG

(11) **EP 1 647 839 A2**
(43) Veröffentlichungstag der Anmeldung: **19.04.2006**
(21) Anmeldenummer: 05022570.5
(22) Anmeldetag: 17.10.2005
(51) Int. Cl.: G01S 17/32

(54) **Verfahren und Entfernungsmessvorrichtung zum Bestimmen der Entfernung zwischen einem Objekt und der Vorrichtung**

(30) Priorität: 18.10.2004 DE 102004050627
(71) Anmelder: AUDI AG, 85045 Ingolstadt (DE)
(72) Erfinder: Riedel, Helmut, Dr., 86697 Oberhausen (DE); Hilgenstock, Jörg, Dr., 30175 Hannover (DE); Ringbeck, Thorsten, Dr., 57076 Siegen (DE); Lange, Robert, Dr., 57368 Lennestadt (DE)
(74) Vertreter: Thielmann, Frank

(57) **Zusammenfassung**

Die Erfindung betrifft ein Verfahren und eine Vorrichtung zum Bestimmen der Entfernung zwischen einem Objekt (200) und einer Entfernungsmessvorrichtung (100). Bei bekannten Verfahren und Vorrichtungen dieser Art wird ein Sendesignal mit einer zeitlich variablen Modulationsfrequenz während einer Belichtungsphase auf das Objekt (200) ausgesendet. Nachfolgend wird ein Empfangssignal (E) in Form eines an dem Objekt (200) reflektierten Anteils des Sendesignals (S) während einer Auslesephase (II) empfangen, wobei die Belichtungsphase (I) und die Auslesephase (II) zusammen einen Bildtakt repräsentieren. Zur Berechnung der gesuchten Entfernung werten die bekannten Verfahren und Vorrichtungen das Sendesignal (S) und das Empfangssignal (E) aus. Um jedoch eine wechselseitige Störung bei einem Parallelbetrieb mehrerer Verfahren und Vorrichtungen mit überlappenden Wirkungsbereichen zu verhindern, wird erfindungsgemäß vorgeschlagen, dass die Modulationsfrequenz des Sendesignals (S) bei der erfindungsgemäßen Entfemungsmessvorrichtung (100) für jede Belichtungsphase (I) individuell neu festgelegt wird.

## Beschreibung

Die Erfindung betrifft ein Verfahren und eine Entfernungsmessvorrichtung zum Bestimmen der Entfernung zwischen einem Objekt und der Vorrichtung. Darüber hinaus betrifft die Erfindung ein Computerprogramm für die Vorrichtung zum Durchführen des Verfahrens.

Aus dem Stand der Technik sind Verfahren und Vorrichtungen zum Bestimmen der Entfernung zu einem Objekt grundsätzlich bekannt. Beispielsweise offenbart die deutsche Offenlegungsschrift DE 199 35 265 A1 ein System zur Messung des Abstandes und der Relativgeschwindigkeit zwischen Objekten. Das dort beschriebene System sendet elektromagnetische Wellen auf eines der Objekte aus und empfängt einen Anteil der an dem Objekt reflektierten Wellen. Dabei wird die Modulationsfrequenz des ausgesendeten Signals während einer Sendephase beziehungsweise Belichtungsphase zeitlich variiert. Genauer gesagt wird die Modulationsfrequenz während der Belichtungsphase von einem ersten Modulationsfrequenzwert näherungsweise linear auf einen zweiten Modulationsfrequenzwert angehoben und nach einer vorbestimmten Verweildauer auf dieser angehobenen zweiten Modulationsfrequenz wieder näherungsweise linear auf einen dritten Modulationsfrequenzwert, welcher vorzugsweise kleiner ist als der zweite Modulationsfrequenzwert, zurückgeführt. Die Zeitdauern, während derer die Überführung der Modulationsfrequenzen in die jeweils anderen Werte stattfindet, sowie die Modulationsfrequenzwerte selber sind veränderbar. Durch die Veränderung wenigstens einzelner dieser Modulationsfrequenzwerte und/oder der Dauer der Überführungszeiten ergibt sich eine maximal mögliche Flexibilität des Systems. Damit ist eine ausreichende Möglichkeit zur Individualisierung einer Vielzahl derartiger Systeme für einen störungsfreien Parallelbetrieb, z.B. in einer Vielzahl von Fahrzeugen im Straßenverkehr, gegeben.

Ausgehend von diesem Stand der Technik liegt der Erfindung die Aufgabe zu Grunde, ein alternatives Verfahren und eine alternative Entfernungsmessvorrichtung zum Bestimmen der Entfernung zwischen der Entfernungsmessvorrichtung und einem Objekt sowie ein Computerprogramm zum Durchführen dieses Verfahrens bereitzustellen, welche ebenfalls so hinreichend individualisierbar sind, dass das Risiko wechselseitiger Störungen bei einem Parallelbetrieb von mehreren derartigen Vorrichtungen mit überlappenden Wirkungsbereichen deutlich reduziert wird, ohne dass die an dem Parallelbetrieb beteiligten Vorrichtungen aufeinander abgestimmt werden müssten.

Diese Aufgabe wird durch das im Patentanspruch 1 beanspruchte Verfahren gelöst. Dieses Verfahren ist dadurch gekennzeichnet, dass die Modulationsfrequenz des Sendesignals für jede Belichtungsphase individuell neu festgelegt wird.

"Neu Festlegen" im Sinne der Erfindung bedeutet grundsätzlich, dass die Modulationsfrequenz des Sendesignals in den Zeiträumen zwischen den Belichtungsphasen zweier aufeinanderfolgender Bildtakte jeweils geändert wird. Erfindungsgemäß ist deshalb die Modulationsfrequenz in jeder Belichtungsphase vorzugsweise jeweils eine andere. Das jeweils "neue Festlegen" schließt jedoch nicht aus, dass die Modulationsfrequenzen während der Belichtungsphasen zweier aufeinanderfolgender Bildtakte ausnahmsweise auch einmal gleich sein können.

Durch die beanspruchte Festlegung der Modulationsfrequenzen wird vorteilhafterweise sichergestellt, dass eine parallele Durchführung von mehreren derartigen Verfahren auch dann störungsfrei möglich ist, wenn sich die räumlichen Wirkungsbereiche, d.h. insbesondere die Sende- und Empfangsbereiche, mehrerer Entfernungsmessvorrichtungen zur Durchführung dieser Verfahren überlappen. Eine Überlappung der Wirkungsbereiche kann insbesondere dann auftreten, wenn die Verfahren von mehreren baugleichen Entfernungsmessvorrichtungen ausgeführt werden, die zur Bestimmung von deren jeweiliger Entfernung zu ein und demselben Objekt an unterschiedlichen Orten positioniert sind; die jeweiligen Abstände von dem Objekt zu den jeweiligen Entfernungsmessvorrichtungen sind dann mit dem beanspruchten Verfahren im Wesentlichen störungsfrei bestimmbar.

Das beanspruchte Verfahren verhindert zwar nicht - wenn es von Entfernungsmessvorrichtungen durchgeführt wird, die in Fahrzeugen eingebaut sind - das Einkoppeln von Sendesignalen in die Entfernungsmessvorrichtungen von entgegenkommenden Fahrzeugen; jedoch wird die Wahrscheinlichkeit für das Auftreten unerwünschter Blendeffekte aufgrund der eingekoppelten Signale durch das beanspruchte Verfahren vorteilhafterweise deutlich reduziert.

Besonders einfach ist das beanspruchte Verfahren dann zu realisieren, wenn die Modulationsfrequenz des Sendesignals während einer Belichtungsphase konstant gehalten wird.

Vorteilhafterweise werden die festzulegenden Modulationsfrequenzen aus einem geeignet vorbestimmten Frequenzband ausgewählt, wobei dieses vorteilhafterweise so hinreichend groß gewählt wird, dass der Eindeutigkeitsbereich der Entfernungsmessung auch bei einer Veränderung der Modulationsfrequenz noch an eine vorgegebene Entfernungsmessaufgabe angepasst bleibt.

Vorteilhafterweise werden die Modulationsfrequenzen des Sendesignals für die unterschiedlichen Belichtungsphasen entsprechend vorgegebener Frequenzschritte festgelegt, wobei die Größe dieser Frequenzschritte vorteilhafterweise so gewählt wird, dass keine unerwünschten Effekte durch Schwebungen auftreten können.

Alternativ zu einer Festlegung der Modulationsfrequenzen entsprechend vorgegebener Frequenzschritte besteht auch die Möglichkeit, die Modulationsfrequenzen nach dem Zufallsprinzip für jeden Belichtungstakt neu festzulegen.

Wenn das Sendesignal als Burst-Signal ausgebildet ist, ist es vorteilhaft, wenn das Sendesignal nur während mindestens eines vorbestimmten Zeitintervalls, welches zeitlich kürzer ist als eine Belichtungsphase, moduliert wird. Das Risiko gleichzeitig auftretender Bursts bei einem Parallelbetrieb von mehreren Entfernungsmessvorrichtungen kann somit gering gehalten werden.

Schließlich ist es vorteilhaft, wenn das beanspruchte Verfahren zur Festlegung der Modulationsfrequenzen erst dann durchgeführt wird, nachdem zuvor eine Feingliederung der Bildtakte in jeweils eine Mehrzahl von Zyklen mit jeweils eigener Zyklus-Belichtungsphase und zugeordneter Zyklus-Auslesephase abgeschlossen ist.

Weitere vorteilhafte Ausgestaltungen des Verfahrens sind Gegenstand der Unteransprüche.

Die oben genannte Aufgabe wird weiterhin durch ein Computerprogramm und eine Entfernungsmessvorrichtung zum Durchführen des beschriebenen Verfahrens gelöst. Die Vorteile dieser Lösungen entsprechen den oben mit Bezug auf das beanspruchte Verfahren erwähnten Vorteilen. Insbesondere das Risiko für eine wechselseitige Beeinflussung baugleicher und parallelbetriebener Entfernungsmessvorrichtungen wird bei erfindungsgemäßer Ausbildung der Vorrichtungen stark reduziert.

Darüber hinaus sei erwähnt, dass sich das beanspruchte Verfahren besonders vorteilhaft für Entfernungsmessvorrichtungen eignet, bei denen die Berechnungseinrichtung zum Berechnen der Entfernung in Form eines elektrooptischen Mischer-Bauelementes, zum Beispiel in Form eines Photonic Mixer Device (PMD), ausgebildet ist.

Der Beschreibung sind insgesamt zwei Figuren beigefügt, wobei:
- Figur 1:: eine erfindungsgemäße Entfernungsmessvorrichtung; und
- Figur 2:: das erfindungsgemäße Verfahren
veranschaulicht.

Die Erfindung wird nachfolgend unter Bezugnahme auf die beiden Figuren in Form eines Ausführungsbeispiels detailliert beschrieben.

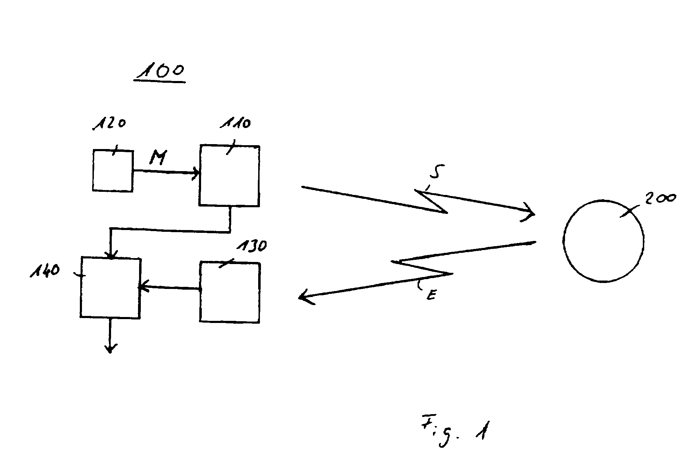

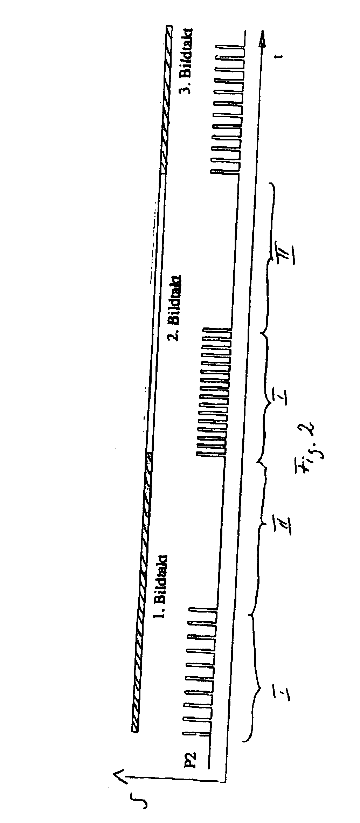

Figur 1 zeigt eine erfindungsgemäße Entfernungsmessvorrichtung 100 zum Bestimmen der Entfernung zwischen der Entfernungsmessvorrichtung 100 und einem Objekt 200. Dazu umfasst die Entfernungsmessvorrichtung 100 eine Sendeeinrichtung 110 zum Aussenden eines Sendesignals S während einer Belichtungsphase I (siehe Fig. 2). Die Sendeeinrichtung umfaßt eine Lichtquelle, zum Beispiel in Form einer LED (LED: Light emitting diode), einer IR-LED (IR-LED: Infra Red LED) oder einer Laserdiode. Die Sendeeinrichtung 110 generiert das Sendesignal S in Form eines frequenzmodulierten Signals. Zur Steuerung der Modulationsfrequenz des Sendesignals umfasst die Entfernungsmessvorrichtung 100 eine Steuereinrichtung 120, welche zwecks Steuerung der Modulationsfrequenz auf die Sendeeinrichtung 110 einwirkt. Die Einwirkung erfolgt in der Weise, dass die Steuereinrichtung 120 ein Modulationssignal M an die Steuereinrichtung 120 ausgibt; das Modulationssignal M ist beispielsweise rechteckförmig, sinusförmig oder dreiecksförmig ausgebildet. Erfindungsgemäß ist die Steuereinrichtung 120 ausgebildet, die Modulationsfrequenz des Sendesignals S für jede Belichtungsphase I individuell neu festzulegen.

Weiterhin umfasst die Entfernungsmessvorrichtung 100 eine Empfangseinrichtung 130 zum Empfangen eines Empfangssignals E, bei dem es sich um einen an dem Objekt 200 reflektierten Anteil des Sendesignals S handelt. Der Empfang des Empfangssignals findet während einer Auslesephase II statt (siehe Fig. 2), welche sich an die erwähnte Belichtungsphase I anschließt. Die Belichtungsphase I bildet zusammen mit der Auslesephase II einen Bildtakt (siehe Fig. 2).

Schließlich umfasst die Entfernungsmessvorrichtung 100 eine Berechnungseinrichtung 140 zum Berechnen der Entfernung zwischen dem Objekt 200 und der Entfernungsmessvorrichtung 100 durch Auswerten des Sendesignals S und des Empfangssignals E. Die Berechnungseinrichtung 140 ist vorzugsweise als elektrooptisches Mischerelement, zum Beispiel als PMD (PMD: Photonic Mixer Device) ausgebildet. PMD's berechnen die gesuchte Entfernung, indem sie unter anderem einen Vergleich der Phasenlage des Sendesignals S mit der Phasenlage des Empfangssignals E durchführen.

Figur 2 veranschaulicht die erfindungsgemäße Funktionsweise der Entfernungsmessvorrichtung 100. Es sind mehrere Bildtakte zu erkennen, die ihrerseits jeweils in eine Belichtungsphase I und eine Auslesephase II unterteilt sind. Das erfindungsgemäße Funktionsprinzip ist in Figur 2 dadurch veranschaulicht, dass sich die Modulationsfrequenz des Sendesignals S während der Belichtungsphase I des zweiten Bildtaktes grundsätzlich von der Modulationsfrequenz des Sendesignals während der Belichtungsphase I des ersten Bildtaktes unterscheidet, hier beispielsweise größer ist.

Weiterhin ist zu erkennen, dass die Modulationsfrequenz innerhalb eines Bildtaktes, insbesondere während einer Belichtungsphase, konstant bleibt. Das Sendesignal wird vorzugsweise nur jeweils während einer Belichtungsphase eines Bildtaktes generiert und ausgesendet; es ist jedoch für die Durchführung des erfindungsgemäßen Verfahrens unschädlich, wenn das Sendesignal darüber hinaus auch noch während der nachfolgenden Auslesephase desselben Bildtaktes generiert und ausgesendet wird.

Aus Gründen der Anschaulichkeit ist das Verhältnis von Periodendauer des Sendesignals während einer Belichtungsphase zur Dauer einer nachfolgenden Auslesephase in Figur 2 stark vergrößert dargestellt. Die Veränderung der Modulationsfrequenz wird in der Realität deutlich geringer gewählt werden als sie in Fig. 2 dargestellt ist.

Die für die Festlegung zur Verfügung stehenden Modulationsfrequenzen werden vorzugsweise aus einem geeignet vorbestimmten Frequenzband ausgewählt. Die Breite beziehungsweise Größe des Frequenzbandes wird vorzugsweise so hinreichend groß gewählt, dass der Eindeutigkeitsbereich der Entfernungsmessung auch bei einer Veränderung der Modulationsfrequenz noch an eine vorgegebene Entfernungsmessaufgabe angepasst bleibt.

Wie bereits gesagt, wird erfindungsgemäß jeder Belichtungsphase I eine Modulationsfrequenz für das dann jeweils ausgesendete Sendesignal individuell zugeordnet. Die Differenz zwischen einer ersten Modulationsfrequenz, welche für das Sendesignal während einer ersten Belichtungsphase festgelegt wird, und einer zweiten Modulationsfrequenz, welche für das Sendesignal während einer zweiten Belichtungsphase festgelegt wird, entspricht vorzugsweise einem vorgegebenen Frequenzschritt, dessen Größe durch einen vorbestimmten Algorithmus für eine Vielzahl von Bildtakten beziehungsweise Belichtungsphasen vorgegeben wird. Es ist vorteilhaft, wenn die Größe der jeweiligen Frequenzschritte so gewählt wird, dass keine unerwünschten Effekte durch Schwebungen auftreten können.

Alternativ zu einer Definition der Modulationsfrequenzen für die einzelnen Belichtungsphasen entsprechend vorgegebener Frequenzschritte ist es auch möglich, die Modulationsfrequenzen statistisch, zum Beispiel mit Hilfe eines Zufallsgenerators, jeweils neu festzulegen beziehungsweise zu verändern. Auch bei dieser Alternative ist es sinnvoll, dass die festgelegten beziehungsweise vergebenen Modulationsfrequenzen aus einem vorgegebenen begrenzten Frequenzband stammen.

Das Sendesignal kann als Burst-Signal mit einem geeigneten Burstphase/Pause-Verhältnis während jeweils einer Belichtungsphase generiert und ausgesendet werden. Dann ist es vorteilhaft, wenn das Sendesignal nicht während der gesamten Belichtungsphase, sondern nur während mindestens eines vorbestimmten Zeitintervalls, welches zeitlich kürzer ist als eine Belichtungsphase I, moduliert wird; bei dem mindestens einen Zeitintervall handelt es sich beispielsweise um eine in dem Burst-Signal periodisch auftretende Burst-Phase. Bei der Ausbildung des Sendesignals als Burst-Signal sollten die Belichtungsphase und die Auslesephase miteinander synchronisiert sein. Das Risiko gleichzeitig auftretender Bursts bei Betrieb von mehreren baugleichen Entfernungsmessvorrichtungen, deren Wirkungsbereiche einander überlappen, kann durch die Synchronisation gering gehalten werden. Bei einer Konstellation, bei der mehrere Entfernungsmessvorrichtungen, deren Belichtungsphasen zeitlich nicht synchronisiert sind, zeitlich parallel betrieben werden, ist davon auszugehen, dass sich die Bursts der jeweiligen Sendesignale der Entfernungsmessvorrichtungen daher - wenn überhaupt - nur geringfügig überlagern.

Die Bildtakte bei Entfernungsmessvorrichtungen mit elektrooptischen Mischerbauelementen, zum Beispiel PMD's, gliedern sich in der Regel jeweils in mehrere Zyklen, deren zeitlicher Verlauf sich wiederum in Zyklus-Belichtungsphasen und Zyklus-Auslesephasen gliedert (in Figur 2 nicht gezeigt). Bei jedem dieser Zyklen ist die Phasenlage der jeweiligen Sendesignale, insbesondere deren Pulse, um einen Bruchteil von π gegenüber dem vorangegangen Zyklus verschoben. Die in jedem Zyklus aus dem PMD's ausgelesenen Messwerte dienen als Stützstellen zur Rekonstruktion einer Korrelationsfunktion, aus der die Entfernung berechnet wird. Die erfindungsgemäße Veränderung der Modulationsfrequenzen der Sendesignale bei einzelnen Bildtakten ist erst dann sinnvoll, nachdem ein Bildtakt in seiner zeitlichen Feingliederung vollständig abgeschlossen ist. Ansonsten würde eine Rekonstruktion der Korrelationsfunktion fehlerhafte Entfernungswerte ergeben.

## Patentansprüche

1. Verfahren zum Bestimmen der Entfernung zwischen einem Objekt (200) und einer Entfernungsmessvorrichtung (100), wobei das Verfahren folgende Schritte umfasst:
Aussenden eines Sendesignals (S), vorzugsweise eines Lichtsignals, mit zeitlich variabler Modulationsfrequenz während einer Belichtungsphase (I) durch die Entfernungsmessvorrichtung (100); Empfangen eines Empfangssignals (E) in Form eines an dem Objekt (200) reflektierten Anteils des Sendesignals (S) während einer Auslesephase (II) durch die Entfernungsmessvorrichtung (100), wobei die Belichtungsphase (I) und die Auslesephase (II) zusammen einen Bildtakt repräsentieren; und
Berechnen der Entfernung durch die Entfernungsmessvorrichtung (100) durch Auswerten des Sendesignals (S) und des Empfangssignals (E);
**dadurch gekennzeichnet,dass**
die Modulationsfrequenz des Sendesignals (S) für jede Belichtungsphase (I) individuell neu festgelegt wird.

2. Verfahren nach Anspruch 1, **dadurch gekennzeichnet, dass** die Modulationsfrequenz während einer Belichtungsphase (I) konstant bleibt.

3. Verfahren nach einem der vorangegangenen Ansprüche, **dadurch gekennzeichnet, dass** die für die Festlegung zur Verfügung stehenden Modulationsfrequenzen aus einem geeignet vorbestimmten Frequenzband ausgewählt werden.

4. Verfahren nach Anspruch 3, **dadurch gekennzeichnet, dass** das geeignete Frequenzband so hinreichend groß gewählt wird, dass die Ergebnisse der Entfernungsmessung auch bei einer Veränderung der Modulationsfrequenz noch eindeutig bleiben.

5. Verfahren nach einem der vorangegangenen Ansprüche, **dadurch gekennzeichnet, dass** die Differenz zwischen einer ersten Modulationsfrequenz, welche für das Sendesignal während einer ersten Belichtungsphase festgelegt wird, und einer zweiten Modulationsfrequenz, welche für das Sendesignal während einer zweiten Belichtungsphase festgelegt wird, einem vorgegebenen Frequenzschritt entspricht, dessen Größe durch einen vorbestimmten Algorithmus vorgegeben wird.

6. Verfahren nach Anspruch 5, **dadurch gekennzeichnet, dass** die Größe des Frequenzschrittes so gewählt wird, dass keine unerwünschten Effekte durch Schwebungen auftreten können.

7. Verfahren nach einem der Ansprüche 1-4 **dadurch gekennzeichnet, dass** die Modulationsfrequenz für jeden Belichtungstakt (I) nach dem Zufallsprinzip neu festgelegt wird.

8. Verfahren nach Anspruch 1, **dadurch gekennzeichnet, dass**
das Sendesignal (S) als Burst-Signal mit einem geeigneten Burstphase/Pause-Verhältnis während der Belichtungsphase generiert und ausgesendet wird; und
das Sendesignal (S) nur während mindestens eines vorbestimmten Zeitintervalls, welches zeitlich kürzer ist als eine Belichtungsphase (I), während der Belichtungsphase moduliert wird.

9. Verfahren nach einem der vorangegangenen Ansprüche, **dadurch gekennzeichnet, dass** die individuelle Festlegung der Modulationsfrequenz des Sendesignals (S) für jede Belichtungsphase erst erfolgt, nachdem eine Feingliederung der Bildtakte in jeweils eine Mehrzahl von Zyklen mit jeweils eigener Zyklus-Belichtungsphase und zugeordneter Zyklus-Auslesephase abgeschlossen ist.

10. Verfahren nach einem der vorangegangenen Ansprüche, **dadurch gekennzeichnet, dass** die Auswertung des Sendesignals (S) und des Empfangssignals (E) einen Vergleich der jeweiligen Phasen dieser beiden Signale umfasst.

11. Computerprogramm für eine Entfernungsmessvorrichtung (100), **dadurch gekennzeichnet, dass** Computerprogramm ausgebildet ist, die Entfernungsmessvorrichtung (100) in die Lage zu versetzen, das Verfahren gemäß einem der Ansprüche 1-10 durchzuführen.

12. Entfernungsmessvorrichtung (100) zum Bestimmen der Entfernung zwischen der Entfernungsmessvorrichtung (100) und einem Objekt (200), umfassend:
eine Sendeeinrichtung (110) zum Aussenden eines Sendesignals während einer Belichtungsphase (I);
eine Steuereinrichtung (120) zum Ansteuern der Sendeeinrichtung (110) zwecks Steuerung der Modulationsfrequenz des Sendesignals (S);
eine Empfangseinrichtung (130) zum Empfangen eines Empfangssignals (E) in Form eines an dem Objekt (200) reflektierten Anteils des Sendesignals (S) während einer Auslesephase (II), wobei die Belichtungsphase (I) und die Auslesephase (II) zusammen einen Bildtakt repräsentieren; und
eine Berechnungseinrichtung (140), vorzugsweise ein elektrooptisches Mischerelement, zum Berechnen der Entfernung durch Auswerten des Sendesignals (S) und des Empfangssignals (E);
**dadurch gekennzeichnet,dass**
die Steuereinrichtung (120) ausgebildet ist, die Modulationsfrequenz des Sendesignals (S) für jede Belichtungsphase (I) individuell neu festzulegen.
